Europäisches Patentamt

(19) European Patent Office

Office européen des brevets

(11) Publication number: **0 209 354**
**B1**

# EUROPEAN PATENT SPECIFICATION

(45) Date of publication of the patent specification:
04.04.90

(51) Int. Cl.⁴: **E04H 15/02, B60R 15/00**

(21) Application number: **86305427.6**

(22) Date of filing: **15.07.86**

(54) Camping unit.

(30) Priority: **16.07.85 GB 8517865**

(43) Date of publication of application:
**21.01.87 Bulletin 87/4**

(45) Publication of the grant of the patent:
**04.04.90 Bulletin 90/14**

(84) Designated Contracting States:
**AT BE CH DE FR GB IT LI LU NL SE**

(56) References cited:
**DE-A- 3 022 637**
**FR-A- 2 472 062**
**FR-A- 2 500 870**
**GB-A- 2 071 025**

(73) Proprietor: **Cuthbert, James David Rollo, Amwellbury Farmhouse Walnut Tree Walk, Great Amwell Hertfordshire(GB)**

(72) Inventor: **Cuthbert, James David Rollo, Amwellbury Farmhouse Walnut Tree Walk, Great Amwell Hertfordshire(GB)**

(74) Representative: **Arthur, George Fitzgerald et al, KILBURN & STRODE 30, John Street, London WC1N 2DD(GB)**

ACTORUM AG

## Description

This invention relates to a camping unit, that is to say, a service unit particularly suitable for use by campers. In this specification, a "service unit" means a cabin containing one or more of such services as a fuel supply, an electricity supply, a water supply, means for connection to an external supply of water, electricity or fuel, and a drain.

Although when camping a tent may contain a cooker energised by gas from a bottle, it is usual for any electricity to be supplied from an overhead or underground line and for campers to use camping blocks for the toilet facilities and washing up.

According to the present invention, a combination of a tent and a service unit, the service unit being a structure capable of transport by road, and means for forming a temporary enclosed passageway between an opening in the tent and an opening in the service unit is characterised by a floor which is common to the tent, the passageway, and preferably the service unit.

Although caravans are known consisting of rigid structures capable of being transported by road, most of the space in a caravan tends to be occupied by living accommodation. For camping, it is very convenient to use a tent for providing the living accommodation, because of the ease with which it can be packed up, transported and moved, but it has been discovered that it is very attractive to be able to associate a conventional tent with a service unit containing all the bulky equipment and means for providing supplies without also having accommodation space, but having means for conveniently coupling the service unit to a tent so that to the user, when the tent is erected, the combination appears to be a single living space.

In British patent specification GB-A 2 071 027 a self-contained towable service unit is disclosed having a toilet unit, a shower unit, a sink and a cooker. It is thus useful for the occupants of the towing vehicle when they wish to camp but there is no suggestion in that British specification of using the service unit in combination with a tent.

German patent specification DE-A 3 022 637 discloses a tent which can be used in combination with a service unit and for that purpose as means defining a temporary passageway from an opening in the tent to an opening in the service unit. The teaching is essentially of a tent and a service unit with an awning enabling someone to travel from one to the other without getting wet in rain.

The present invention is characterised by a complete enclosed passageway between an opening in the tent and an opening in the sevice unit which includes a floor common to the tent the passageway and preferably the service unit so that from the point of view of the occupant the tent and the service unit and the passageway are a single entity and are protected from the weather and from moisture in the ground.

The invention may be carried into practice in various ways and one embodiment will now be described by way of example with reference to the accompanying drawings, in which:

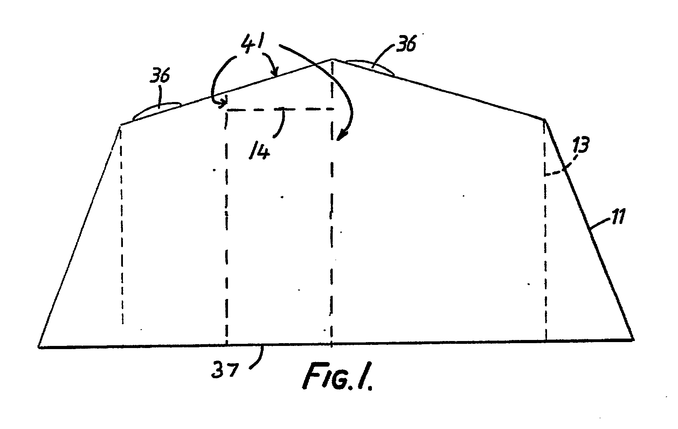

Figure 1 is a diagrammatic front view of a tent having a mobile block unit at its rear;

Figure 2 is a plan view of the tent and block unit;

Figure 3 is a plan view of the block unit with the roof omitted; and

Figures 4, 5 and 6 are elevations of the block unit as seen respectively in the directions indicated by the arrows A, B and C in Figure 3.

The tent 11 is conventional and has a rear opening 12 which has been used in the past for access to a toilet unit.

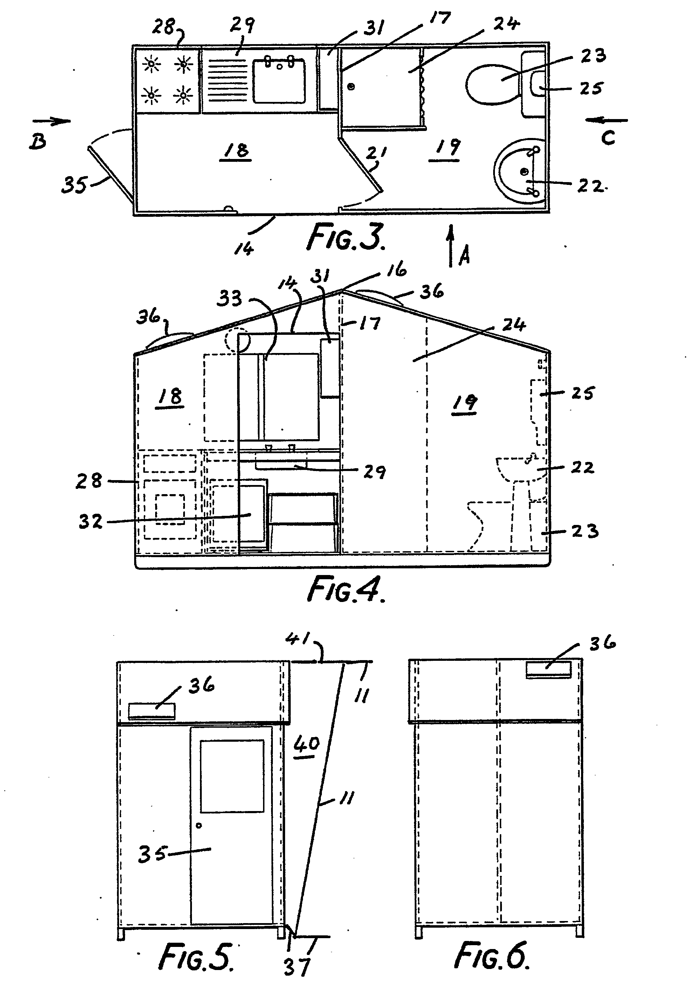

The block unit 13 is of more permanent construction being in the form of a small cabin or caravan with rigid walls, floor and ceiling, and has an opening 14 part-way along one side as shown in Figures 3 and 4 which mates with the opening 12 in the back of the tent.

The block unit 13 would usually be mounted on wheels for transportation over the camping site and indeed along the road. There will also be provision for supply of at least cold water and possibly electricity and there will be a drain for removal of waste water. Many camp sites have appropriate connections for such supplies and services.

Figure 4 shows that the block unit has a slightly pitched and ridged roof extending transversely across the top midway between the ends, and below the ridge 16 is a partition 17 which divides the unit into a kitchen unit 18 and a toilet unit 19. The partition has a door 21 so that the toilet unit can normally be closed off.

The toilet unit 19 includes a hand basin 22, a close coupled toilet suite 23, a shower unit 24, and a butane gas operated water heater 25 arranged to pass exhaust fumes to the outside of the unit.

The kitchen unit 18 has a bottled gas operated cooker 28, a sink unit 29, a cupboard 31, a refrigerator 32 under the sink unit, and sliding windows 33. In addition to the access through the opening 14 in the side there is a door 35 in one end of the unit for direct access to the kitchen from outside.

The pitched roof has vents 36 respectively over the toilet unit and the kitchen unit.

In the example being described, the block unit is 3600 mm in length to correspond with the width of the tent 11 and is 1500 mm in width to be a convenient size for transportation by road. The height is about 2400 mm.

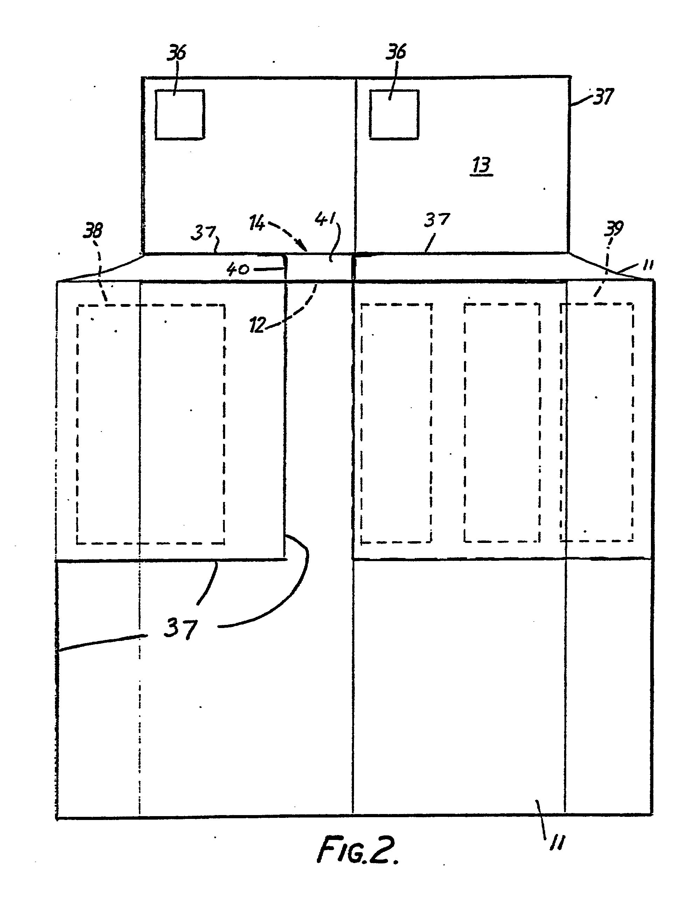

Figure 2 shows by the heavy line 37 how a uniform and continuous floor is common to the main body of the tent, to the passage between the two bed compartments 38 and 39 of the tent, and the block unit 13. That floor will be of waterproof fabric or sheet plastics material and will be connected all around the heavy line 37 in Figure 2 by a zip to the tent and to the block unit.

A fabric cover 40 zipped or otherwise connected at its ends to the tent opening 12 and the unit opening 14 and at the bottom of its sides to the floor 13, defines an enclosed passageway 41 between the unit and the tent.

Thus, apart from the bed compartments 38 and 39 there will be a continuous floor and continuous access from the front part of the tent to the kitchen and toilet unit.

This makes a very convenient camping dwelling with the main body of the tent being collapsible conventionally, and the services unit, which is not collapsible, being of such a size as to be easily brought and manoeuvered into position, and to form an integral whole with the tent.

Altough it has been proposed to provide toilet units as additions at the side of a tent and it has been proposed to provide small awnings or the like at an end of the towed caravan, each of those proposals still results in what is essentially either a tent which can be completely collapsed and packaged for stowing, or a caravan which is completely self-contained and can be towed from the site by a car.

## Claims

1. A combination of a tent (11); a service unit (13), which unit is a structure capable of transport by road, and is in the form of a cabin containing one or more of such services as a fuel supply, an electricity supply, a water supply, means for connection to an external supply of water, electricity, or fuel, and a drain; and means for forming a temporary enclosed passageway (41) between an opening (12) in the tent and an opening (14) in the unit; characterised by a floor (37) common to the passageway and at least a part of the tent and preferably also to the sevice unit.

2. A combination as claimed in claim 1 including an entrance (35) to the service unit in addition to the opening to the passageway.

3. A service unit as claimed in claim 1 or claim 2 in which the floor is of sheet waterproof material.

4. A service unit as claimed in claim 3 in which the floor is connected to the passageway and the tent by a zip.

## Patentansprüche

1. Kombination aus einem Zelt (11), einer Versorgungseinheit (13), die eine zum Straßentransport geeignete Struktur aufweist und in Form einer Kabine ausgeführt ist, die ein oder mehrere solcher Versorgungseinrichtungen wie einen Brennstoffanschluß, einen Elektrizitäts-Anschluß, einen Wasseranschluß, Einrichtungen zum Anschließen an eine externe Wasser-, Elektrizitäts- oder Brennstoffzufuhr und eine Abflußleitung enthält, und aus einer Einrichtung zum Ausbilden eines zeitweilig geschlossenen Durchgangs (41) zwischen einer Öffnung (12) im Zelt und einer Öffnung in der Versorgungseinheit, gekennzeichnet durch einen gemeinsamen Boden (37) für den Durchgang und wenigstens einen Teil des Zeltes sowie bevorzugt auch für die Versorgungseinheit.

2. Kombination nach Anspruch 1, mit einem zusätzlich zur Öffnung zum Durchgang vorgesehenen Eingang (35) zur Versorgungseinheit.

3. Versorgungseinheit nach Anspruch 1 oder Anspruch 2, bei welcher der Boden aus wasserdichter Folie besteht.

4. Versorgungseinheit nach Anspruch 3, bei welcher der Boden mittels eines Reißverschlusses an den Durchgang und das Zelt angeschlossen ist.

## Revendications

1. Une combinaison d'une tente (11) et d'une unité de service (13), ladite unité constituant une structure apte au transport par route et qui prend la forme d'une cabine contenant au moins un des services tel qu'une fourniture de carburant, qu'une fourniture d'électricité, qu'une fourniture d'eau, que des moyens de liaison à une alimentation extérieure en eau, en électricité ou en carburant, et qu'une vidange ou mise à l'égout; et des moyens pour former un passage temporairement fermé (41) entre une ouverture (12) dans la tente et une ouverture (14) dans l'unité, caractérisé par un plancher (37) commun au passage et à au moins une partie de la tente et de préférence également à l'unité de service.

2. Une combinaison selon la revendication 1 comprenant une entrée (35) pour l'unité de service, en plus de l'ouverture vers le passage.

3. Une unité de service selon la revendication 1 ou la revendication 2 dans laquelle le plancher est réalisé en matériau en feuille ou tôle, étanche à l'eau.

4. Une unité de service selon la revendication 3 dans laquelle le plancher est relié au passage et à la tente par une fermeture à glissière.

**Fig. 1.**

FIG.2.

FIG.3.

FIG.4.

FIG.5.

FIG.6.